# EUROPEAN PATENT APPLICATION

(11) **EP 3 961 053 A1**
(43) Date of publication of application: **02.03.2022**
(21) Application number: 21751320.9
(22) Date of filing: 04.02.2021
(51) Int. Cl.: F16B 33/06, C23C 8/16

(54) **FASTENING MEMBER AND METHOD FOR MANUFACTURING SAME**

(30) Priority: 05.02.2020 JP 2020017942
(71) Applicant: Shibaura Institute of Technology, Tokyo 135-8548 (JP); Yahata Holdings Corporation, Kitanagoya-shi, Aichi, 481-0036 (JP)
(72) Inventor: SERIZAWA Ai, Tokyo 135-8548 (JP); ISHIZAKI Takahiro, Tokyo 135-8548 (JP); WATANABE Yuichiro, Kitanagoya-shi, Aichi 481-8555 (JP); ENDO Ayumi, Kitanagoya-shi, Aichi 481-8555 (JP)
(74) Representative: Dey, Michael
(86) International application number: PCT/JP2021/004055
(87) International publication number: WO 2021/157644

(57) **Abstract**

Provided is a fastening member having a base material including an aluminum alloy and an anticorrosive film with which the base material is coated. This anticorrosive film contains aluminum hydroxide oxide (AIO(OH)), and in a profile obtained from X-ray diffractometry with a Cu-Kα radiation on the fastening member, a peak intensity ratio R (I_{B(020)}/I_{Al(200)}) is 0.003 or more and 0.1 or less, wherein I_{B(020)} is an intensity of a diffraction peak of a (020) plane of aluminum hydroxide oxide, and I_{Al(200)} is an intensity of a diffraction peak of a (200) plane of aluminum as a main peak. The anticorrosive film formed by the present invention is uniformly formed on the fastening member and excellent in stability and adhesion.

## Description

### BACKGROUND OF THE INVENTION

### FIELD OF THE INVENTION

The present invention relates to a fastening member including an aluminum alloy. The present invention specifically relates to a fastening member having an excellent corrosion-resistant film on a surface of an aluminum alloy base material and a method for producing the same.

### DESCRIPTION OF THE RELATED ART

Aluminum alloys are light-weight and have been widely used in the fields of automobiles, aircrafts, and other common industries in order to reduce weights of various components. Accordingly, the range of applications of such aluminum alloys is expanding. Particularly, in respect of fastening members in the automobile field, fastening members made of aluminum alloys, which are relatively light-weight, have attracted attention instead of conventional fastening members made of steel, in view of improving fuel efficiency by weight reduction in automobile bodies.

It is deemed that the use environment of the applications described above is a high-temperature environment for aluminum alloys having a relatively low melting point. For this reason, corrosion due to surface oxidization of aluminum alloy materials may be concerned. When aluminum is left in air, the aluminum is passivated by generation of a native oxide film. The thickness of this native oxide film is of the order of a few nanometers, and thus, aluminum is easily corroded under extreme humid, acid, or alkali environment. Then, surface treatment methods for improving corrosion resistance of aluminum alloy materials have been conventionally investigated. At present, in addition to alumite treatment, boehmite treatment, and plating treatment, chemical conversion treatments such as phosphoric acid chromate treatment, chromic acid chromate treatment, zinc phosphate treatment, and non-chromate treatment are known, which are used according to use environments (e.g., Patent Document 1 and Patent Document 2). In these various chemical conversion treatments, an aluminum alloy as a material to be treated is brought into contact with and immersed in a treatment liquid containing acid such as H₂SO₄ or alkali, and heavy metal ions such as Cr to thereby form an anticorrosive film on an alloy surface.

### Prior Art Document

### Patent Document

Patent Document 1
   Japanese Patent Application Laid-Open No. 2008-232366
Patent Document 2
   Japanese Patent Application Laid-Open No. 9-112521

### SUMMARY OF THE INVENTION

### Technical Problem

In surface treatment techniques such as chemical conversion treatment as described above, there have been problems of increase in costs for purchasing specific treatment liquids and for treating waste liquid and problems of loads on the environment. In the case where these surface treatment techniques are applied to a fastening member having a complicated shape, it is difficult to form a uniform anticorrosive film because such a treatment is conducted in a treatment liquid (in a liquid phase), and bubbles in the treatment liquid may inhibit stable formation of the anticorrosive film. Particularly, it has been extremely difficult to form an anticorrosive film on a thread or the like of the fastening member. A fastening member on which a uniform anticorrosive film is not stably formed may be broken because of decrease in the strength due to corrosion.

The present inventors have disclosed a surface treatment method for improving the corrosion resistance of an aluminum alloy material, the method including bringing steam in a predetermined temperature range into contact with an alloy surface. In such steam treatment of an aluminum alloy material, a film including aluminum hydroxide oxide (AIO(OH)) as the main component is formed on the surface, and the corrosion resistance is improved by the anticorrosive action of this film.

Steam treatment has safety and environmental compatibility in view of waste liquid treatment and the like, and also can relatively easily impart corrosion resistance to aluminum alloy materials by formation of an anticorrosive film. However, in consideration of the spreading tendency of the range of applications of aluminum alloy materials described above, desired is an anticorrosive film having excellent corrosion resistance equivalent to or superior to that provided by conventional surface treatment techniques such as chemical conversion treatment. When steam treatment is applied to a fastening member, the anticorrosive film is also required to have high hardness and be excellent in adhesion because stress is applied to the fastening member during or after fastening.

However, there are still many unclear points with respect to the improving effect of steam treatment on the corrosion resistance of an aluminum alloy material, and it is anticipated that, for example, the constitution of the anticorrosive films still have room for improvement. In particular, there is no specific and detailed finding on an anticorrosive film which has adhesion and sufficiently coats the surface of members having a complicated shape such as fastening members including bolts.

The present invention has been made under such circumstances and aims to provide a fastening member, which is composed on an aluminum alloy, and has an anticorrosive film that is uniform, stable and excellent in adhesion. The present invention also discloses a fastening member also having an improved strength in addition to the corrosion resistance. Further, the present invention also reveals a method for producing a fastening member, the method being capable of achieving both effects of formation of an anticorrosive film and of improvement in the strength described above in a single treatment step.

### Solution to Problem

The present inventors have intensively studied to solve the problem described above and have found that formation of an anticorrosive film including aluminum hydroxide oxide (AIO(OH)) having a high degree of orientation with respect to a specific crystal plane on the surface of a fastening member including an aluminum alloy improves corrosion resistance and is useful for the fastening member having excellent in adhesion.

Specifically, the present invention is drawn to a fastening member having a base material including an aluminum alloy and an anticorrosive film with which the base material is coated, wherein the anticorrosive film contains aluminum hydroxide oxide (AIO(OH)), and in a profile obtained from X-ray diffractometry with a Cu-Kα radiation on the fastening member, a peak intensity ratio R (I_{B(020)}/I_{Al(200)}) is 0.003 or more and 0.1 or less, wherein I_{B(020)} is the peak intensity of a diffraction peak of the (020) plane of aluminum hydroxide oxide, and I_{Al(200)} is the peak intensity of a diffraction peak of the (200) plane of aluminum as the main peak. Hereinafter, the configuration of the fastening member of the present invention will be described in detail.

### (A) Configuration of Fastening Member of Present Invention

### (A-1) Base material

As described above, the base material constituting the fastening member of the present invention includes an aluminum alloy. This aluminum alloy is an alloy, which includes aluminum as the main component and at least one additive element added thereto. An aluminum alloy including at least one element of zinc (Zn), magnesium (Mg), silicon (Si), copper (Cu), manganese (Mn), lithium (Li), iron (Fe), nickel (Ni), silver (Ag), zirconium (Zr), and chromium (Cr) as the additive element(s) is the base material. The base material of the present invention is preferably an aluminum alloy having a total content of these additive elements of 0.1% by mass or more and less than 50% by mass.

Here, the material structure of the aluminum alloy base material preferably is a structure in which a compound containing the additive element(s) is precipitated and dispersed in aluminum as the mother phase. This compound is a compound constituted by the additive elements of the aluminum alloy. The specific composition of the compound is based on the composition of the aluminum alloy as the base material. As described above, zinc, magnesium, silicon, copper, manganese, lithium, iron, nickel, silver, zirconium, chromium, or others is often added as the additive elements of the aluminum alloy base material. In this case, the compound to be dispersed in the aluminum alloy base material includes at least one of these metal elements. Specifically, a compound such as a Mg-Si-based compound (e.g., Mg₂Si), a Mg-Zn-based compound (e.g., MgZn₂), a Al-Mg-Zn-based compound (e.g., Mg₃Zn₃Al₂), a Cu-Mg-based compound (e.g., CuMg₂), an Al-Fe-based compound (e.g., AlFe₂), an AI-Fe-Si-based compound (e.g., Al₁₂Fe₃Si), an Al-Cu-based compound (e.g., CuAl₂), an AI-Cu-Mg-based compound (e.g., AlCuMg, Al₂CuMg), an AI-Mn-based compound (e.g., Al₆Mn), an AI-Mn-Fe-based compound (e.g., Al₆MnFe), an AI-Mn-Si-based compound, or an AI-Fe-Mn-Si-based compound is dispersed.

Examples of specific aluminum alloys include various aluminum alloys each specified by the international aluminum alloy designation system. For example, an Al-Cu-based alloy as a 2000-series alloy, an Al-Si-based alloy as a 4000-series alloy, an AI-Mg-based alloy as a 5000-series alloy, Al-Mg-Si-based alloy as a 6000-series alloy, and an AI-Zn-Mg-based alloy as a 7000-series alloy are preferable. Various precipitation hardening-type aluminum alloys such as Al-Cu-, Al-Mg-Si-, and AI-Zn-Mg-based alloys are particularly preferable. However, the aluminum alloy is not limited to such a standardized alloy system, and an alloy system of a wide variety of compositions can be applicable.

### (A-2) Anticorrosive Film

The surface of a base material including an aluminum alloy constituting the fastening member of the present invention is coated with an anticorrosive film containing aluminum hydroxide oxide. Aluminum hydroxide oxide handled in the present invention is also referred to as boehmite, and is an aluminum compound represented by γ-AlO(OH) or simply by AIO(OH). An aluminum source for use in the aluminum hydroxide oxide of the present invention is not particularly limited, and the aluminum hydroxide oxide preferably includes, as a component, aluminum from the aluminum alloy constituting the base material. The anticorrosive film includes aluminum hydroxide oxide as the main component, and additionally, various additive elements other than aluminum, aluminum hydroxide (Al(OH)₃), pseudoboehmite, and the like, which are contained in the aluminum alloy of the base material, are acceptable as inevitable impurities.

### (A-2-1) X-ray Diffraction Pattern

The characteristic of the fastening member of the present invention can be identified based on a profile obtained by an X-ray diffraction method (XRD) (X-ray diffraction pattern). With regard to the X-ray source for the X-ray diffraction method, the characteristic is identified based on a profile obtained with a Cu-Kα radiation, which is generated from Cu as the X-ray source. The X-ray diffraction method can identify, for example, a crystal plane of an object to be measured (Miller index) based on a profile of the object, and can determine the abundance ratio of the object from a diffraction peak (peak intensity) to be obtained. Also in the fastening member of the present invention, the crystal planes and abundance ratios of aluminum as the mother phase of the aluminum alloy constituting the base material and of aluminum hydroxide oxide as the anticorrosive film with which the base material is coated can be determined (X-ray diffractometry).

The fastening member of the present invention is characterized in that, in a profile obtained from X-ray diffractometry with a Cu-Kα radiation on the fastening member, a peak intensity ratio R (I_{B(020)}/I_{Al(200)}), which is calculated by dividing I_{B(020)} by I_{Al(200)}, is 0.003 or more and 0.1 or less, wherein I_{B(020)} is the peak intensity of a diffraction peak of the (020) plane of aluminum hydroxide oxide, and I_{Al(200)} is the peak intensity of a diffraction peak of the (200) plane of aluminum as the main peak. In other words, the anticorrosive film of the present invention is characterized in that the abundance ratio of the specific crystal plane (020) of aluminum hydroxide oxide to aluminum as the mother phase of the base material, which is represented by a peak intensity ratio R, is in a specific range.

A fastening member having a peak intensity ratio R of 0.003 or more and 0.1 or less has improved corrosion resistance, which is useful for the fastening member. When the peak intensity ratio R of less than 0.003, the growth of aluminum hydroxide oxide is insufficient, and the effect of an anticorrosive film is insufficient. In an anticorrosive film including aluminum hydroxide oxide having a peak intensity ratio of more than 0.1, the corrosion resistance tends to decrease. Excessively grown aluminum hydroxide oxide is not preferable because the adhesion of the anticorrosive film decreases. As for the range of the peak intensity ratio R, the lower limit value is preferably 0.005, more preferably 0.01. The upper limit value is preferably 0.05, more preferably 0.03.

In the profile of the fastening member of the present invention obtained by the X-ray diffraction method described above, the half width of the diffraction peak of the (020) plane of aluminum hydroxide oxide is preferably 0.20° or less. When the half width of the diffraction peak is 0.20° or less, the growth of highly crystalline aluminum hydroxide oxide can be confirmed. This highly crystalline aluminum hydroxide oxide may have high adhesion and corrosion resistance as the anticorrosive film of a fastening member. The half width of the present invention is a full width at half maximum. The full width at half maximum is defined as the width at one-half of the diffraction peak height. Accordingly, the minimum value of the half width (full width at half maximum) will not be 0 but exceeds 0.

### (A-2-2) Thickness of Anticorrosive Film

The anticorrosive film of the fastening member of the present invention preferably has a thickness of 1 µm to 15 µm. A thickness below 1 µm, which gives poor corrosion resistance for a fastening member, is not preferable. When the thickness exceeds 15 µm, the adhesion to the base material decreases, and thus, the film may come off due to stress during or after fastening.

### (A-3) Strength of Fastening Member of Present Invention

The fastening member of the present invention also has an excellent strength. Specifically, those having a Vickers hardness of 100 Hv to 250 Hv are preferable. Such hardness is twice to 5 times larger than that of a fastening member of the same type including an aluminum alloy of the same composition. This improved hardness is attributable not to the effect of the anticorrosive film but to increase in the hardness of the base material itself. As described below, due to the treatment temperature on formation of the anticorrosive film, increase in the hardness occurs simultaneously with formation of the film.

### (A-4) Specific Forms of Fastening Member of Present Invention

The fastening member of the present invention is applied to a common fastening part without particular limitation. The fastening member of the present invention can be applied to a common fastening part, for example, a bolt, a screw, a nut, a tap, a washer, and a rivet, and a part in which these fastening parts are used. Particularly, the fastening member can stably form an anticorrosive film on a fastening part having a complicated shape, and thus is useful. Specific examples include a bolt, a screw, and a nut.

### (B) Method for Producing Fastening Member of Present Invention

Next, the method for producing a fastening member of the present invention will be described. In production of a fastening member of the present invention, a fastening member including an aluminum alloy as the base material is produced by a common production process. A commercially available fastening member including an aluminum alloy may be used. Subjecting the base material including an aluminum alloy to steam treatment causes an anticorrosive film to be formed to thereby produce the fastening member of the present invention. However, for formation of the anticorrosive film including aluminum hydroxide oxide oriented to the specific crystal plane described above, an improvement is made on the conventional production process. Specifically, the improvement resides in washing for reducing a specific impurity element, which is conducted before the steam treatment.

In other words, the method for producing a fastening member of the present invention includes a washing step of washing a base material including an aluminum alloy, a solution step of conducting solution treatment that includes heating the base material after the washing step to a temperature of 460°C or more and 570°C or less and then quenching the base material, and an anticorrosive film formation step of bringing the base material after the solution treatment into contact with steam to form a film, wherein the washing step is a step of washing the base material until the amount of foreign matter including Fe attached to the base material decreases to 0.6 µg/mm² or less, and the anticorrosive film formation step is a step of bringing the base material into contact with steam of 230°C to 290°C. Hereinafter, each step will be described.

### (B-1) Washing Step

According to studies by the present inventors, when a trace amount of Fe is present on the surface of the aluminum alloy, growth of aluminum hydroxide oxide as the main component of the anticorrosive film may be inhibited. Then, a fastening member including an anticorrosive film derived from the base material in which such Fe is present is inferior in corrosion resistance.

The factor of presence of Fe on the surface of the fastening member including an aluminum alloy is deemed to reside in the production process of the fastening member. On processing a fastening member, drawing processing, forging processing, rolling processing, or cutting processing is usually conducted. In these processing steps, dies and tools are used for processing. Here, in an actual production site, also conventional steel fastening members are often produced while the same dies or the same manufacturing facilities are shared, in view of higher efficiency of manufacturing lines, for example. For this reason, even in the case of aluminum alloy products, iron may be often attached to the surface of the products. Fe attributed to a die itself, such as a superhard die, may be attached to the surface of the aluminum alloy. Also in the case where a fastening member is produced by cutting processing, Fe contained in a cutting oil may be attached to the surface of an aluminum alloy.

Also for fastening members so far, the final processing step is usually followed by a washing step. However, this washing step is not intended to remove a specific element Fe but for removing sludge or dirt such as organic matter. With such a common washing step, it is not possible to sufficiently remove Fe. Then, residual Fe inhibits effective formation of an anticorrosive film, as described above.

The present inventors thus have decided to essentially add a washing step of washing the fastening member until the amount of foreign matter including Fe attached to the fastening member as the base material decreases to 0.6 µg/mm² or less, to the production method for the fastening member of the present invention. With the amount of foreign matter including Fe attached to the surface of the base material including an aluminum alloy of 0.6 µg/mm² or less, growth of the (020) plane of aluminum hydroxide oxide can be facilitated without inhibition, to thereby form a uniform anticorrosive film having a high degree of orientation with respect to the (020) plane.

The washing process in the washing step of the present invention may be any washing process as long as the process exhibits the effect of reducing the amount of Fe attached, and an existing washing process may be applied. Examples of the washing process include electrolysis, washing with an acidic solution (pickling), and hydrocarbon-based detergents.

Specifically, the washing step preferably includes a process including an ultrasonic washing step as a first step, a steam washing step as a second step, and a drying step as a third step. In an ultrasonic washing step as the first step, ultrasonic washing is conducted with a hydrocarbon-based detergent in a washing tank to remove foreign matter on the base material surface. In the steam washing step as a second step, high-temperature vapor including the hydrocarbon-based detergent is introduced into the washing tank to conduct finish washing of the base material, and also the base material is heated. Conducting such a two-stage washing on the base material enables the amount of foreign matter attached to the base material surface to be markedly reduced. In the drying step as the third step, after the hydrocarbon-based detergent is discharged, a high vacuum environment is created inside of the washing tank, which causes the base material to be vacuum-dried. During this vacuum drying, residual heat of the base material heated in the second step facilitates volatilization of the hydrocarbon-based detergent attached to the base material surface, and thus, the base material is dried without discoloration.

The amount of foreign matter including Fe attached to the base material (µg/mm²) can be calculated based on the gravimetry by a residue measurement test. In the gravimetry by a residue measurement test, the hydrocarbon-based detergent used in the washing step described above is filtered with a membrane filter, and the change in the weight of the membrane filter itself before and after the filtration is measured to thereby determine the weight of foreign matter attached to the base material surface. Thereafter, the weight of the foreign matter is divided by the total surface area of the base material washed in the washing step to calculate the amount of foreign matter attached to the base material surface (µg/mm²). Presence or absence of Fe contained in the foreign matter can be confirmed with qualitative analysis on the foreign matter attached to the membrane filter after filtration with a scanning electron microscope.

### (B-2) Solution Treatment Step

It is anticipated that manufactured and commercially available common aluminum alloy materials have a material structure that may lead to nonuniform and irregular film formation, such as irregular compound dispersion, coarse compound dispersion, compound lacking, or the like. For this reason, solution treatment is used to homogenize the structure state of the base material to thereby provide an alloy material having stable properties. In the solution treatment, the base material is heated to 460°C to 570°C and then cooled. The heating period is preferably 0.1 hours to 48 hours. Cooling is preferably water cooling, and use of water cooling at 5°C or less is more preferable.

### (B-3) Anticorrosive Film Formation Step

Then, steam treatment of bringing steam into contact with the base material subjected to the washing step and solution step as described above is conducted to form an anticorrosive film on the surface of the base material, and thus, the fastening member of the present invention is provided. The steam treatment forms the anticorrosive film by direct film growth on the base material surface while aluminum contained in the aluminum alloy of the base material is used as the source of aluminum hydroxide oxide. Thus, a film having high conformability to the shape of base material is formed. Accordingly, this is useful for formation of an anticorrosive film on a fastening member having a complicated shape, and a uniform anticorrosive film is stably formed also on the thread or the like of the fastening member.

In the steam treatment step for this anticorrosive film formation, the temperature of the steam is set to 230°C to 290°C. With steam treatment outside the range of 230°C to 290°C, aluminum hydroxide oxide that may serve as a preferable anticorrosive film is not formed, and an anticorrosive film excellent in corrosion resistance and adhesion cannot be formed. The temperature of steam is more preferably 250 to 280°C. The treatment period of the steam treatment is preferably 1 hour to 48 hours.

The steam to be in contact with the base material is generated by heating and evaporating water. As water to be used as the steam source, industrial water or tap water can be used, and use of pure water is preferable. An aqueous solution containing a salt as appropriate also can be used. In use of pure water, ion exchange water having an electric conductivity of 1 mS/m or less, distilled water, or ultra-pure water is preferably used. As the aqueous solution containing a salt, an aqueous solution of a carbonate, a nitrate, a sulfate, or a fluoride can be used. As these salts, alkali metals (e.g., lithium, sodium, potassium) (e.g., sodium carbonate, sodium nitrate) and salts of alkaline earth metals (e.g., calcium, strontium, barium) (e.g., calcium carbonate, calcium nitrate), as well as salts of noble metals and salts of common metals are applicable, for example. An aqueous solution of one of these salts or of a plurality of these salts in combination can be used.

The pressure of the steam is preferably in the range of 0.1 MPa to 10 MPa. The pressure of the steam is more preferably 2 MPa to 8 MPa. Application of pressurized steam establishes a two-phase equilibrium state of saturated vapor and subcritical water, which can enhance the reactivity for formation of an anticorrosive film. Keeping the pressure of steam during treatment constant enables a uniform anticorrosive film to be formed.

A method of bringing steam into contact with the aluminum alloy base material is not particularly limited. The steam treatment may be conducted with exposure of an aluminum alloy, as a material to be treated, to steam in a closed space such as a predetermined reactor, container, or the like. As a specific approach, the treatment can be conducted while the base material is placed with water in a container and the base material is exposed to a steam atmosphere generated under controlled temperature and pressure. Alternatively, the treatment may be conducted with direct injection of steam onto the material to be treated.

The steam treatment described above forms an anticorrosive film as well as exhibits the effect of improving the hardness (improving the strength) of the base material. This improvement in the hardness is attributed to an aging effect by the aluminum alloy subjected to the solution treatment described above. The steam treatment in the method of the present invention is conducted at a temperature of 230°C or more as described above. This treatment temperature is a higher temperature than the preferable temperature range in conventional steam treatment. It is deemed that aging proceeds due to this steam treatment at a high temperature. The preferable treatment period for the steam treatment described above takes the time required for the aging effect to be exhibited and prevention of excessive aging into consideration.

### Advantageous Effect of Invention

As described hereinabove, the fastening member of the present invention is useful as a fastening part because a uniform and stable anticorrosive film can be formed at low cost on the base material made of an aluminum alloy having a complicated shape, and the anticorrosive film is excellent in adhesion with the base material, has high hardness, and has corrosion resistance more excellent than before.

### BRIEF DESCRIPTION OF THE DRAWINGS

Fig. 1 is a schematic view illustrating the configuration of a vapor curing apparatus used in the present embodiment.
Fig. 2 is SEM micrographs of the surface (anticorrosive film) of the fastening member of First Embodiment.
Fig. 3 is an XRD profile of the fastening member of First Embodiment.

### DETAILED DESCRIPTION OF THE PREFERRED EMBODIMENTS

First Embodiment: Hereinafter, a preferred embodiment of the present invention will be described. In the present embodiment, a bolt including an Al-Mg-Si-based alloy (A6061 alloy), which is a 6000-series aluminum alloy, was used as a base material of an aluminum alloy. This bolt was subjected to steam treatment to produce a fastening part including a fastening member having an anticorrosive film formed.

### [Production of Fastening Member]

In the present embodiment, a commercially available A6061 alloy bolt was used as the base material. First, as a washing step for the base material, washing treatment was conducted until the amount of foreign matter including Fe attached to base material surface decreased to 0.6 µg/mm² or less. In the washing step, ultrasonic washing and vapor washing of the base material were each conducted for 10 minutes in a single tank-type hydrocarbon-based washer (manufactured by Aqua Chemical Co. Ltd., TETRA) with a hydrocarbon-based detergent (product name: AQUA Solvent manufactured by Aqua Chemical Co. Ltd.), and then, the base material was vacuum-dried. Thereafter, the amount of foreign matter including Fe attached to the base material (µg/mm²) was calculated based on the gravimetry by a residue measurement test. Presence of Fe contained in the foreign matter was qualitatively analyzed on the foreign matter attached to the membrane filter after filtration of the hydrocarbon-based detergent, with a scanning electron microscope.

Next, the base material after the washing step was subjected to solution treatment. In the solution treatment, the base material was heated in a salt bath at 560°C and then cooled. The heating period was 0.5 hours. Cooling was conducted with icy water at 0°C.

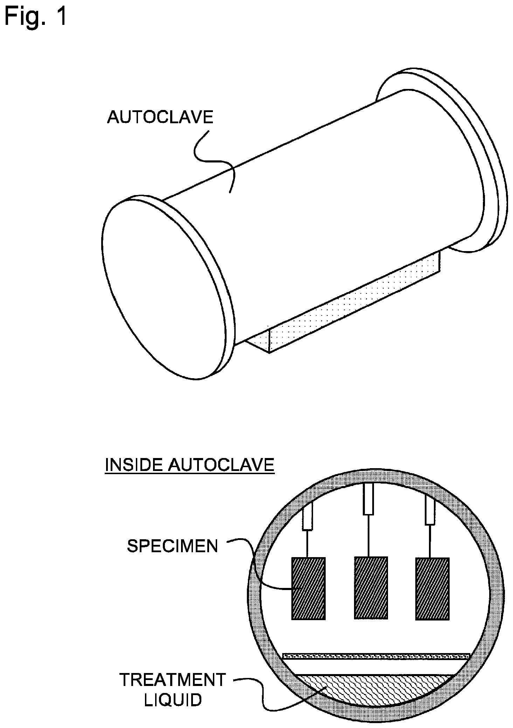

The solution-treated base material was subjected to steam treatment to form an anticorrosive film. In the steam treatment, a vapor curing apparatus shown in Fig. 1 was used. The vapor curing apparatus of Fig. 1 is a horizontal autoclave, and the autoclave included pure water (20 ml), which was the vapor source and was injected in the lower portion as a treatment liquid. From the upper part of the apparatus, a plurality of specimens (base materials) can be suspended. The treatment was conducted under conditions for anticorrosive film formation including temperature: 200°C (Reference Example 1), 240°C (Example 1), 260°C (Example 2), and 290°C (Example 3); pressure: 1.5 MPa (Reference Example 1), 3.3 MPa (Example 1), 4.6 M Pa (Example 2), and 7.4 MPa (Example 3); and treatment period: 24 hours with the temperature and pressure maintained.

Comparative Examples 1 and 2: A bolt identical to those of Example 1 and the like was washed, but the amount of foreign matter such as Fe attached to and included in the base material was set to more than 0.6 µg/mm². In this washing step, the fastening member was only immersed in a hydrocarbon-based detergent for 5 minutes. Then, the steam treatment was conducted under the same conditions as in Example 2 to form an anticorrosive film (Comparative Example 1). As Comparative Example 2, a bolt including an A6061 alloy having no anticorrosive film formed (untreated product) was provided.

The fastening member of Examples 1 to 3, Reference Example 1, and Comparative Examples 1 and 2 produced by the steps hereinabove were subjected to various evaluations.

### [Observation of Surface Feature of Anticorrosive Film with SEM]

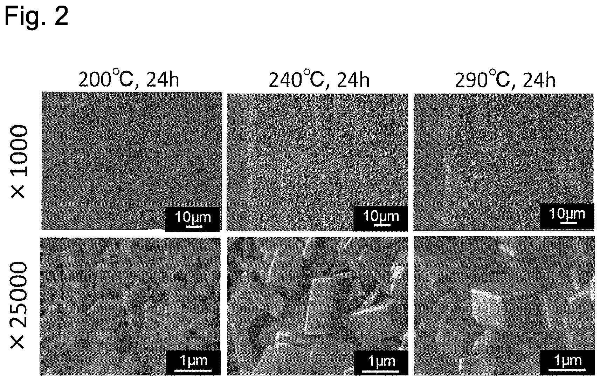

The surface feature of the anticorrosive films was observed with a scanning electron microscope (SEM). Fig. 2 is SEM micrographs showing the surface feature of the anticorrosive films formed on the surface of the A5056 alloy bolts of Examples 1 to 3 at each steam treatment temperature. It was confirmed from Fig. 2 that crystals considered to be AIO(OH) was densely formed on the bolt surface each of Examples 1 to 3 in conformance with the shape of the base material at any of the temperatures.

### [Analysis by X-Ray Diffraction Method (XRD)]

Next, the fastening members of the present embodiment and Comparative Examples were analyzed by an X-ray diffraction method (XRD). XRD measurement was conducted with Cu-Kα as the X-ray source at a voltage of 40 kV and a current of 30 mA. XRD was conducted on the fastening members of the present embodiment and Comparative Examples having an anticorrosive film formed and the fastening member having no anticorrosive film formed (untreated product: Comparative Example 2).

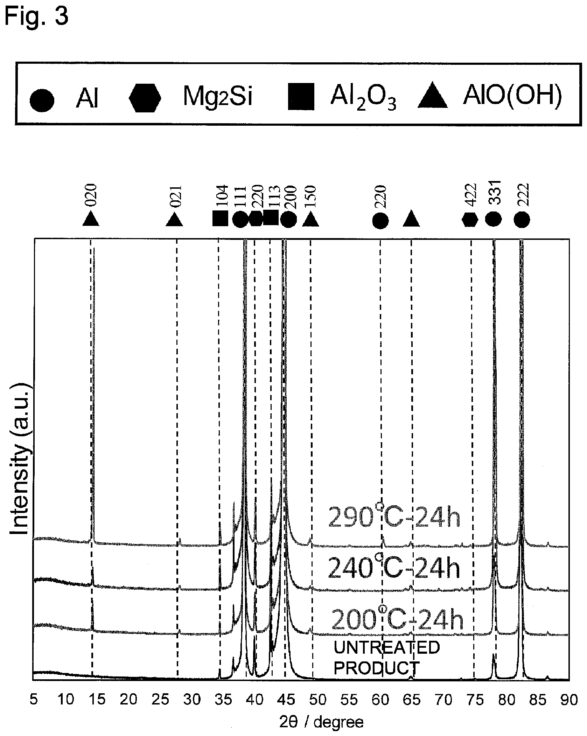

Fig. 3 is a XRD profile for the fastening members on which an anticorrosive film was formed at various steam temperature and the fastening member as an untreated product. It can be confirmed from Fig. 3 that the present embodiment has a strong diffraction peak on the (020) plane of aluminum hydroxide oxide. In Fig. 3, a peak intensity ratio R was calculated from the peak intensity of the (020) plane of aluminum hydroxide oxide and the peak intensity of the (200) plane of aluminum of the base material including an aluminum alloy. The half width was also measured based on the XRD profile obtained. In half width measurement, the width at the one-half of the diffraction peak height was measured. The values of the peak intensity ratio R and the half width of Examples, Reference Example, and Comparative Examples at various steam treatment temperature are shown in Table 1.

**[Table 1]**

| No. | Steam treatment temperature | Peak intensity ratio R | Half width |
|---|---|---|---|
| Example 1 | 240°C | 0.005 | 0.19° |
| Example 2 | 260°C | 0.018 | 0.17° |
| Example 3 | 290°C | 0.04 | 0.15° |
| Reference Example 1 | 200°C | 0.002 | 0.23° |
| Comparative Example 1 | 240°C | 0.002 | 0.21° |
| Comparative Example 2 | - | 0 | - |

### [CASS Test]

A CASS test in accordance with JIS H 8502 was used to evaluate the corrosion resistance of the fastening members of present embodiment and Comparative Examples. The CASS test is a test method of inspecting corrosion resistance of plating, which is conducted in an atmosphere including a sprayed solution with a CASS test apparatus, the solution being an acetic acid sodium chloride solution including copper(II) chloride dihydrate added thereto. The CASS test was conducted with a CASS test apparatus (JIS Z 2371) under the conditions in Table 2 for a test period of 1 to 24 hours.

**[Table 2]**

| **Items** | **On adjustment** | **During test** |
|---|---|---|
| **Sodium chloride concentration, g/l** | **50 ± 5** | **50 ± 5** |
| **Cupric chloride (CuCl₂·2H₂O) concentration, g/l** | **0.26 ± 0.02** | **-** |
| **pH** | **3.0** | **3.0 - 3.2** |
| **Amount sprayed, ml/80cm²/h** | **-** | **1.5 ± 0.5** |
| **Temperature in test tank, °C** | **-** | **50 ± 2** |
| **Salt solution tank temperature, °C** | **-** | **50 ± 2** |
| **Air saturator temperature, °C** | **-** | **63 ± 2** |
| **Compressed air pressure, kPa** | **-** | **70-167** |

The appearance of the fastening members after the CASS test was visually observed. A member in which no corrosion occurred was rated as "A", a member in which corrosion was partially confirmed was rated as "B", and a member in which corrosion was entirely confirmed was rated as "C". The CASS test was conducted, in principle, until corrosion occurred entirely (until the member was rated as C). The results of the CASS test are shown in Table 3.

**[Table 3]**

| No. | Steam treatment temperature | Salt spray test: test period | Salt spray test: evaluation results |
|---|---|---|---|
| Example 1 | 240°C | 1 h | A |
| | | 6 h | B |
| | | 8 h | B |
| Example 2 | 260°C | 1 h | A |
| | | 6 h | A |
| | | 8 h | A |
| | | 14 h | A |
| | | 24 h | B |
| Example 3 | 290°C | 1 h | A |
| | | 6 h | B |
| | | 8 h | B |
| | | 14 h | C |
| Reference Example 1 | 200°C | 1 h | A |
| | | 6 h | C |
| Comparative Example 1 | 260°C | 1 h | A |
| | | 6 h | C |
| | | 8 h | C |
| Comparative Example 2 | - | 1 h | C |

It can be confirmed from Table 3 that the entire corrosion occurred only in 1 hour in the aluminum alloy subjected to no steam treatment (Comparative Example 2) and thus, the anticorrosive film formed in each of Example, Comparative Example 1, and the like has effectivity. Then, it can be seen that the fastening member of each Example maintains an entire corrosion-free state for 6 hours or more against the salt solution of the CASS test. In particular, in Example 2, in which steam treatment was conducted at 260°C, a favorable state was maintained until 24 hours.

However, it is necessary to conduct the steam treatment on the fastening members at an appropriate treatment temperature. In the case of the treatment temperature of 200°C as in Reference Example 1, corrosion entirely occurred in 6 hours, and it is deemed that an anticorrosive film that may have sufficient corrosion resistance was not generated. In order to form a film exhibiting a high anticorrosive effect on the fastening member including an aluminum alloy, it is necessary for washing to limit the amount of iron to be attached. On a fastening member subjected to usual washing, by which the amount of iron to be attached cannot be limited, as in Comparative Example 1, a film exhibiting an insufficient anticorrosive effect was formed, which was equivalent to that in Reference Example 1.

The anticorrosive effect from the anticorrosive film corresponds to the peak intensity ratio R (I_{B(020)}/I_{Al(200)}) of the peak intensity of the diffraction peak of the (020) plane of aluminum hydroxide oxide to the peak intensity of the diffraction peak of the (200) plane of the aluminum. With reference to Reference Example 1 and Examples 1 to 3, this peak intensity ratio gradually increases in the range of from the vicinity of 200°C to 240°C, the increase rate rises therefrom, and the peak intensity ratio rapidly increases in the range of higher than around 260°C.

### [Hardness and Anticorrosive Film Thickness]

On the anticorrosive film formed on the fastening member of each of Examples and Comparative Examples, evaluation test was conducted for the thickness of the anticorrosive film and the hardness of the base material. For the thickness of the anticorrosive film, cross sectional processing was conducted on a vertical cross section including the anticorrosive film and the base material with a Cross Section Polisher (R) manufactured by JEOL Ltd., a field emission scanning electron microscope image of the cross section was obtained, and the thickness was measured. For measurement of the hardness, each sample was mechanically polished before measurement to remove the film from the surface, and this sample surface was subjected to measurement. The hardness was measured with a Micro Vickers Hardness Testing Machine (HM-103, manufactured by Mitutoyo Corporation), and the hardness measurement conditions included a test load of 2.94 N and a load period of 15 s. The evaluation results are shown in Table 4

**[Table 4]**

| No. | Steam treatment temperature (°C) | Surface hardness (HV) | Anticorrosive film thickness (µm) |
|---|---|---|---|
| Example 1 | 240 | 128 | 2.1 |
| Example 2 | 260 | 115 | 5.9 |
| Example 3 | 290 | 110 | 13.8 |
| Comparative Example 2 | - | 52 | - |

It can be seen from the results of Table 4 that anticorrosive films having a sufficient thickness have been formed with the steam treatment. It can also be seen that the steam treatment increased the base material hardness two-fold or more at the maximum. Thus, it has been confirmed that fastening members were formed which had a strength sufficiently durable to stress during or after fastening.

Second Embodiment: in the present embodiment, a bolt including an Al-Cu-Mg-based alloy (A7075 alloy), which is a 7000-series aluminum alloy, was used as a base material of an aluminum alloy. This bolt was subjected to steam treatment to produce a fastening part including the fastening member having an anticorrosive film formed, and various examinations were conducted.

First, a commercially available A7075 alloy bolt was washed as the base material. In a washing step for the base material, washing was conducted with the apparatus and detergent identical to those in First Embodiment under the same conditions. The washing treatment was conducted until the amount of foreign matter including Fe attached to base material surface decreased to 0.6 µg/mm² or less. Then, the base material after the washing step was subjected to solution treatment. In the solution treatment, the base material was heated in a salt bath at 470°C and then cooled. The heating period was 2 hours. Cooling was conducted with ice water at 0°C.

Then, the solution-treated base material was subjected to steam treatment to form an anticorrosive film. In the steam treatment, the same vapor curing apparatus as that of First Embodiment was used. The treatment was conducted under conditions for anticorrosive film formation including temperature: 180°C (Reference Example 2) and 240°C (Example 4); pressure: 1.0 MPa (Reference Example 2) and 3.3 MPa (Example 4); and treatment period: 24 hours with the temperature and pressure maintained.

Comparative Examples 3 and 4: A bolt identical to those of Example 4 and the like was washed, but the amount of foreign matter such as Fe attached to and included in the base material was set to more than 0.6 µg/mm². In this washing step, the fastening member was only immersed in a hydrocarbon-based detergent for 5 minutes. The bolt after washing was subjected to alumite treatment with a sulfuric acid electrolytic solution to thereby form an anticorrosive film (film thickness: 5 µm to 10 µm) (Comparative Example 3). As Comparative Example 4, a bolt including an A7075 alloy having no anticorrosive film formed (untreated product) was provided.

The fastening members of Example 4 and Comparative Examples produced by the steps hereinabove were subjected to the evaluation of corrosion resistance by the CASS test. The test conditions for the CASS test were the same as those of First Embodiment. Then, the appearance was visually observed, and an evaluation was conducted with the same criteria as in First Embodiment. The results of this CASS test are shown in Table 5.

**[Table 5]**

| No. | Steam treatment temperature | Salt spray test: test period | Salt spray test: evaluation results |
|---|---|---|---|
| Example 4 | 240°C | 1 h | A |
| | | 6 h | A |
| | | 8 h | A |
| | | 14 h | B |
| | | 24 h | B |
| Reference Example 2 | 180°C | 1 h | A |
| | | 6 h | C |
| | | 8 h | C |
| | | 14 h | C |
| | | 24 h | C |
| Comparative Example 3 | - (Alumite treatment) | 1 h | A |
| | | 6 h | B |
| | | 8 h | B |
| | | 14 h | C |
| | | 24 h | C |
| Comparative Example 4 | - | 1 h | C |

It can be confirmed from Table 5 that the entire corrosion occurred only in 1 hour in the aluminum alloy subjected to no steam treatment (Comparative Example 4) and thus, the anticorrosive films formed in Example 4, Reference Example 2, and the like have effectivity. Then, it can be seen that the fastening member of Example 4 maintains a favorable entire corrosion-free state for 24 hours or more against the salt solution of the CASS test. It can also be seen that the anticorrosive film formed in Example 4 exhibits markedly more favorable corrosion resistance in comparison with the film formed with alumite treatment in Comparative Example 3. However, in the case of a treatment temperature of 180°C as in Reference Example 2, corrosion entirely occurred in 6 hours, and an anticorrosive film that may have sufficient corrosion resistance was not generated. As with in First Embodiment, it was confirmed that it is necessary to conduct the steam treatment at an appropriate treatment temperature.

Also in the present embodiment, when the surface feature of the anticorrosive film of Example 4 was observed with a SEM, it was confirmed that crystals considered to be AIO(OH) was densely formed in conformance with the shape of the base material.

Third Embodiment: in the present embodiment, a bolt including an Al-Si-based alloy (ADC12 alloy), which is a 4000-series aluminum alloy, was used as a base material of an aluminum alloy. This bolt was subjected to steam treatment to produce a fastening part including the fastening member having an anticorrosive film formed and subjected to various examinations.

First, a commercially available ADC12 alloy bolt was washed as the base material. In the washing step for the base material, washing was conducted with the apparatus and detergent identical to those in First Embodiment under the same conditions. The washing treatment was conducted until the amount of foreign matter including Fe attached to base material surface decreased to 0.6 µg/mm² or less. In present embodiment, a bolt including an Al-Si-based alloy (ADC12 alloy), which is a 4000-series aluminum alloy, was used as a base material of an aluminum alloy, and thus, the solution treatment on the base material after the washing step was not conducted.

The base material after the washing step was steam-treated to form an anticorrosive film. In the steam treatment, the same vapor curing apparatus as that of First Embodiment was used. The treatment was conducted under conditions for anticorrosive film formation including temperature: 240°C (Example 5), pressure: 3.3 MPa (Example 5), and treatment period: 24 hours with the temperature and pressure maintained.

Comparative Examples 5 and 6: A bolt identical to that of Example 5 was washed, but the amount of foreign matter such as Fe attached included in the base material was set to more than 0.6 µg/mm². In this washing step, the fastening member was only immersed in a hydrocarbon-based detergent for 5 minutes. The bolt after washing was subjected to alumite treatment with a sulfuric acid electrolytic solution to thereby form an anticorrosive film (film thickness: 5 µm to 10 µm) (Comparative Example 5). As Comparative Example 6, a bolt including an ADC12 alloy having no anticorrosive film formed (untreated product) was provided.

The fastening members of Example 5 and Comparative Examples produced by the steps hereinabove were subjected to the evaluation of corrosion resistance by the CASS test. The test conditions for the CASS test were the same as those of First Embodiment. Then, the appearance was visually observed, and an evaluation was conducted with the same criteria as in First Embodiment. The results of this CASS test are shown in Table 6.

**[Table 6]**

| No. | Steam treatment temperature | Salt spray test: test period | Salt spray test: evaluation results |
|---|---|---|---|
| Example 5 | 240°C | 1 h | A |
| | | 2 h | B |
| | | 6 h | B |
| | | 8 h | C |
| | | 14 h | C |
| | | 24 h | C |
| Comparative Example 5 | (Alumite treatment) | 1 h | A |
| | | 2 h | B |
| | | 6 h | B |
| | | 8 h | C |
| | | 14 h | C |
| | | 24 h | C |
| Comparative Example 6 | - | 1 h | C |

Also in the present embodiment, corrosion entirely occurred within 1 hour in the aluminum alloy not subjected to the steam treatment (Comparative Example 6). It can be seen that the aluminum alloy of Example 5 maintains an entire corrosion-free state for 6 hours or more against the salt solution of the CASS test. In consideration of the result of Comparative Example 6 having no anticorrosive film, the 4000-series aluminum alloy (Al-Si-based alloy) as the base material of the present embodiment is an aluminum alloy having relatively lower corrosion resistance than those of the 6000-series aluminum alloy (AI-Mg-Si-based alloy) as the base material of First Embodiment and the like. It has been confirmed that formation of an anticorrosive film with steam treatment at an appropriate treatment temperature also on such an aluminum alloy having low corrosion resistance enables the corrosion resistance to be greatly improved.

In comparison with the film formed with alumite treatment in Comparative Example 5, it can be seen that the anticorrosive film formed in Example 5 exhibits corrosion resistance equivalent to that of the film in Comparative Example 5. The anticorrosive film of the present application can be formed with a relatively simple process (steam treatment) although the temperature conditions are required to be strictly set. It is deemed that according the present invention, corrosion resistance to be imparted by a process simpler than alumite treatment and the like, which corrosion resistance is equivalent to or superior to that imparted by alumite treatment and the like. When the anticorrosive film of Example 5 was observed with SEM, it was confirmed that crystals considered to be AIO(OH) was densely formed in conformance with the shape of the base material, as in First and Second Embodiments.

### Industrial Applicability

As described hereinabove, the present invention can provide a fastening member, on the base material made of an aluminum alloy having a complicated shape of which a uniform and stable anticorrosive film can be inexpensively formed, the anticorrosive film being excellent in adhesion with the base material, having high hardness, and having corrosion resistance more excellent than before, and a method for producing the same. Accordingly, it is anticipated that the fastening member is broadly applied to fastening parts made of an aluminum alloy, of which the range of applications tends to spread.

## Claims

1. A fastening member having a base material comprising an aluminum alloy, and an anticorrosive film for coating the base material, wherein
the anticorrosive film contains aluminum hydroxide oxide (AIO(OH)), and
in a profile obtained from X-ray diffractometry with a Cu-Kα radiation on the fastening member, a peak intensity ratio R (I_{B(020)}/I_{Al(200)}) is 0.003 or more and 0.1 or less, wherein a peak intensity of a diffraction peak of a (020) plane of aluminum hydroxide oxide is I_{B(020)}, and a peak intensity of a diffraction peak of a (200) plane of aluminum as a main peak is I_{Al(200)}.

2. The fastening member according to claim 1, wherein a half width of the diffraction peak of the (020) plane of aluminum hydroxide oxide is 0.20° or less.

3. The fastening member according to claim 1 or claim 2, wherein the anticorrosive film has a thickness of 1 µm to 15 µm.

4. The fastening member according to any one of claim 1 to claim 3, having a Vickers hardness of 100 Hv to 250 Hv.

5. The fastening member according to any one of claim 1 to claim 4, wherein the aluminum alloy is an Al-Si-based aluminum alloy, an Al-Cu-based aluminum alloy, an AI-Mg-based aluminum alloy, an AI-Mg-Si-based aluminum alloy, an AI-Zn-Mg-based aluminum alloy, or an Al-Zn-Mg-Cu-based alloy.

6. The fastening member according to any one of claim 1 to claim 5, wherein the fastening member is a bolt, a screw, or a nut.

7. A method for producing the fastening member defined in any one of claim 1 to claim 6, comprising:
a washing step of washing a base material comprising an aluminum alloy,
a solution step of conducting solution treatment for heating the base material after the washing step to a temperature of 460°C or more and 570°C or less and then quenching the base material, and
an anticorrosive film formation step of bringing the base material after the solution treatment into contact with steam to form a film, wherein
the washing step is a step of washing the base material until the amount of foreign matter including Fe attached to the base material decreases to 0.6 µg/mm² or less, and
the anticorrosive film formation step is a step of bringing the base material into contact with steam of 230°C to 290°C.
